Europäisches Patentamt

European Patent Office

Office européen des brevets

(11) Publication number: **0 269 794**
**A2**

## (12) EUROPEAN PATENT APPLICATION

(21) Application number: **87112797.3**

(22) Date of filing: **02.09.87**

(51) Int. Cl.⁴: **G01N 27/52** , G01N 27/46 ,
G01N 27/58

(30) Priority: **07.11.86 US 928216**

(43) Date of publication of application:
**08.06.88 Bulletin 88/23**

(84) Designated Contracting States:
**DE GB**

(71) Applicant: **ALLIED CORPORATION**
**Columbia Road and Park Avenue P.O. Box**
**2245R (Law Dept.)**
**Morristown New Jersey 07960(US)**

(72) Inventor: **Green, Norman c/o Allied**
**Corporation**
**P.O. Box 2245R Columbia Rd. & Park Avenue**
**Morristown N.J. 07960(US)**

(74) Representative: **Brock, Peter William**
**UOP Processes International Corporation 48**
**Leicester Square**
**London WC2H 7LW(GB)**

(54) **Method and means for operating an electrochemical cell having redox potential applied thereto.**

(57) Method and means for operating a two electrode electrochemical cell in which a bias voltage from a high impedance source is applied to the cell to promote reaction of analyte gas in the cell. The cell is connected to an external circuit through a switch which periodically opens and closes the connection to the external circuit. During the open portion of the switch cycle, the cell accumulates a charge exceeding the charge placed thereon from the bias source by an amount dependent upon the concentration of analyte gas. During the closed portion of the switch cycle, the voltage across the cell is compared to the bias voltage and the difference therebetween is measured to determine the amount of any excess charge on the cell. Means are disclosed for automatically adjusting the bias voltage applied to the cell to compensate for cell background current.

FIG.5

## Method and Means for Operating an Electrochemical Cell Having Redox Potential Applied Thereto

The present invention relates generally to electrochemical cells for detecting the presence of toxic gases in the atmosphere. More particularly, this application is a continuation-in-part of United States Patent Application Serial No. 816,648 filed December 23, 1985 for "Method and Apparatus for Operating Electrochemical Detector Cell" by Norman Green and Charles H. Ward II, inventors.

The above referenced parent application describes a method and means for operating a two electrode electrochemical cell to detect the presence of gases which will react at zero relative potential between the cell electrodes to produce current flow in a current measurement circuit external to the cell. Many gases of interest require a potential difference between the cell electrodes to produce an oxidation or reduction in the cell which will give rise to a detactable signal current. The present invention relates to an improvement in the method and means of the parent invention whereby a two electrode cell may be operated at other than zero relative electrode potential while preserving the enhanced sensitivity afforded by the parent invention.

One form of electrochemical detector in prominent use is the differential pulse polarographic cell. This cell is of the three electrode type comprising a working electrode, a counter electrode, often referrred to as an auxiliary electrode, and a reference electrode, all of which are immersed in an electrolyte. A potentiostat circuit, through the reference electrode, senses the relative potential at the working electrode and adjusts the potential applied to the working electrode to conform to a particular analytical program.

In U. S. Patent 4,500,391, issued February 19, 1985 for "Method and System for Real Time Differential Pulse Detection", the potential at the working electrode is maintained at a bias level near to, but below that which would promote reaction between the analyte gas and the working electrode. Periodically, the bias is pulsed to the reactive level. The cell current is sampled at a time just prior to the beginning of a bias pulse and at a time just prior to the end of a bias pulse. The difference between these two current samples represents the signal current output of the cell. This method of operation tends to suppress the effect of background current in the current output of the cell.

In an example given in the referenced patent, if NO were to be detected, a fixed bias of 0.9 v. would be applied to the cell, which bias level is slightly below the redox potential of 1.0 v. of the species to be detected. Periodically, a pulse of 0.2 v. amplitude is superimposed on the fixed bias, raising the cell potential momentarily to 1.1 v. Prior to the appearance of a bias pulse, with the cell potential at 0.9 v., many of the common interferent gases, if present, will be reduced and result in a cell background current. After application of the bias pulse, the same background current will be included in the cell output current, along with any signal current due to the presence of analyte gas. By taking the difference between the amplitudes of a first cell current sample taken just prior to the appearance of a bias pulse and a second cell current sample taken just prior to the end of a bias pulse, a differential current sample is provided which should be indicative of the cell signal current alone.

Since the detector cell is electrically equivalent to a large value capacitor, any change in the value of the bias potential applied thereto results in the flow of a large value transient current, whether or not any analyte gas is present. It is necessary, therefore, to delay taking the second cell current sample until nearly the end of the bias pulse at a time when the transient charging current of the cell has decayed nearly to zero, otherwise the cell signal current is completely masked by the transient current.

It is known that when the external circuit of a detector cell remains open for a relatively extended time, so that no current can flow through the cell, and assuming analyte gas to be present, upon closing the external circuit a surge of current is observed which is from five to seven times greater than the steady state value of current flow. This initial surge of cell current is believed to be due to an initially high concentration gradient of the analyte gas at the working electrode of the cell when no current is flowing through the cell. Upon closing the cell circuit, the concentration gradient and the cell current diminish with time until steady state values are reached.

The method of operation of the detector cell set forth in U.S. Patent 4,500,391 inherently fails to take advantage of the high sensitivity which can be obtained through the increased concentration gradient effect. The fundamental disadvantage of prior pulse voltammetry methods lies in the necessity to delay sampling the cell output current until such time as the transient capacitive charging current therein has decayed nearly to zero. After such a delay, the cell signal will normally have diminished to a steady state value and the surge which occurs therein upon initially closing the cell external circuit becomes unobservable. The parent application of Green and Ward describes a method and means of operating a two electrode cell with zero relative potential between the counter and working electrodes of the cell which provides high sensitivity through utilization of the increased concentration gradient effect.

An advantage of the present invention is that it enables the operation of a two electrode cell at other than zero relative potential between the counter and working electrodes of the cell while still providing high sensitivity through utilization of the increased concentration gradient effect.

BRIEF DESCRIPTION

Briefly, the improvement of the invention comprises the method of operating a two electrode electrochemical cell in which the working electrode is supplied with a constant bias potential from a high internal impedance source. The working electrode is switched alternately into and out of contact with a low internal impedance current measurement circuit which is referenced to the constant bias potential. The cell accumulates a charge of equal potential to the bias source. If a gas reactive at the bias potential is present, the charge of the cell is increased above the charge applied thereto by the bias source. When the cell is switched into contact with the current measurement circuit any charge on the cell due to gas reaction is drained off but the charge placed thereon by the bias source is not drained off because the current measurement circuit is referenced to the bias potential. The transient current which would appear if the cell was discharged to ground potential during contact with the current measurement circuit does not flow. Consequently, the entire current output of the cell during connection of the cell to the current measurement circuit results from the presence of reactive gas and, further, such current is enhanced by the concentration gradient effect.

Common interferent gases which may also react at the selected bias potential are eliminated by a permselective membrane which separates the working electrode of the cell from the sample airstream. Compensation for cell background currents not caused by interferents is provided by means which automatically adjust the output of the cell bias source to the value required for zero current output when the cell is exposed to clean air.

DESCRIPTION OF THE DRAWINGS

Fig. 1 is a simplified schematic diagram of a prior art differential pulse polaragraphic detector cell;

Fig. 2A and 2B are waveform diagrams illustrating the bias pulse and the current output of the detector cell of Fig. 1;

Fig. 3 is a simplified schematic diagram of the detector cell of the present invention;

Fig. 4A is a timing diagram showing the operation of switch 18 of Fig. 3;

Fig. 5 is a functional block diagram showing the detector cell of Fig. 3 together with means for compensating for background current therein; and

Fig. 6 is a chart of output voltage v. time for a detector cell of the type shown in Fig. 5 when exposed to a relatively weak concentration of toxic gas.

DETAILED DESCRIPTION

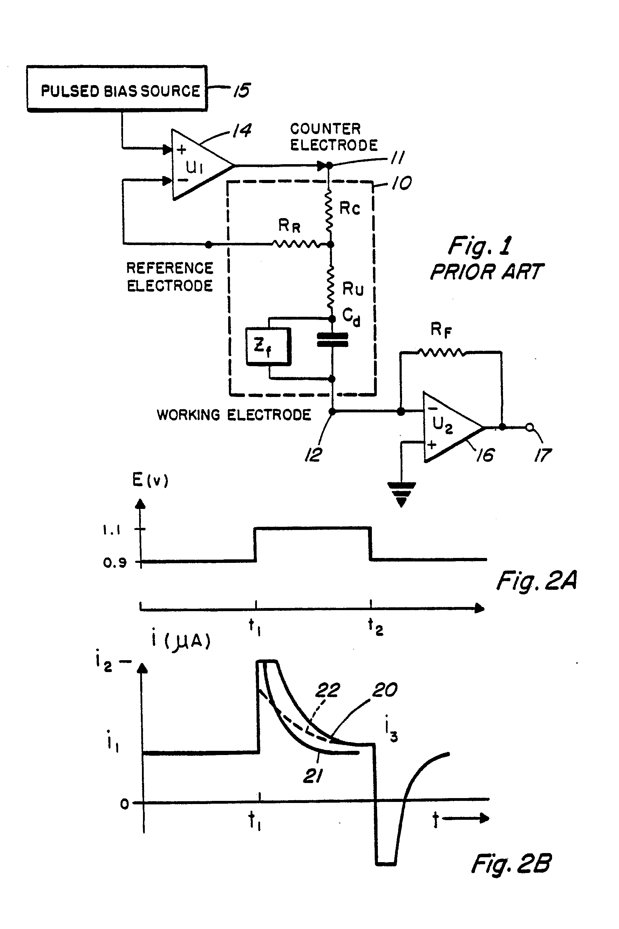

Fig. 1 is a simplified schematic diagram of the prior art differential pulse polarographic detector cell. The three electrode cell 10 thereof is represented by an equivalent electrical circuit in which the resistance through the electrolyte between the counter electrode terminal 11, the working electrode terminal 12 and the reference electrode terminal 13 are symbolized by a compensated resistor Rc, an uncompensated resistor Ru and a reference resistor Rr connected as shown. The double layer capacitances existing at the metal-electrolyte interface of the counter electrode and working electrode are shown as a single capacitor Cd, which is paralleled by a faradic impedance Zf. Impedance Zf may be regarded as a variable resistor having a value dependent upon the concentration of an analyte gas reacting at the working electrode.

An operational amplifier 14 receives an input bias potential function from a pulsed bias source 15 and operates as a potentiostat to maintain the potential at the junction of resistors Rc and Rr equal to the applied bias function. The working electrode terminal 12 of the cell is connected to the input of operational amplifier 16 serving as a current to voltage converter, such that the voltage $E_o$ at output terminal 17 is given by $E_o = i_cRf$, where $i_c$ is the cell current.

Figs. 2A and 2B are waveform diagrams typifying a pulsed bias input function to amplifier 14 and the resultant output of amplifier 15, scaled in terms of cell current, for the cell shown in Fig. 1. Fig. 2A illustrates an input bias function which might comprise, if NO is to be detected, a pulse of 0.2 v. amplitude superimposed upon a fixed bias level of 0.9 v. The pulse duration is 200 ms and the pulse repetition rate is 1 p.p.s. Line 20 of Fig. 2B is examplary of the waveform of the output of amplifier 16. Prior to the appearance of the leading edge of the bias pulse at time $t_1$, a background

current $i_1$ flows through the cell having a magnitude dependent upon the concentration of interferent gases which are reactive at 0.9 v. At time $t_1$ the bias pulse causes a sharp increase in cell current to the saturation level $i_2$ of amplifier 16. Between time $t_1$ and time $t_2$ the cell bias remains constant at 1.1 v. and the cell current decays to a steady state level $i_3$. At the end of the bias pulse at time $t_2$, the reduction in cell bias drives amplifier 16 to its negative saturation level and thereafter the amplifier output gradually returns to the background current level $i_1$.

Waveform 20 is composed of two components shown by dashed lines 21 and 22. Line 21 has the larger peak value and is attributable to the current necessary to charge capacitor Cd through resistor Ru from a voltage level of 0.9 v. to 1.1 v. Line 22 has the smaller peak value and is attributable to the faradic current caused by the reaction of the analyte gas at the cell working electrode. The faradic current 22 is the data of interest but it is not separable from the charging current 21 in the output waveform 20. Consequently, it is necessary to delay sampling waveform 20 until very nearly time $t_2$, at which time the charging current 21 will have decayed to a negligible value. Near time $t_2$, however, the faradic current has diminished to a fraction of its initial value. Substantial improvement in sensitivity of the detector could be gained by the elimination of the charging current 21 from waveform 20, since the cell current could then be sampled much closer to time $t_1$ when the faradic current is near peak value.

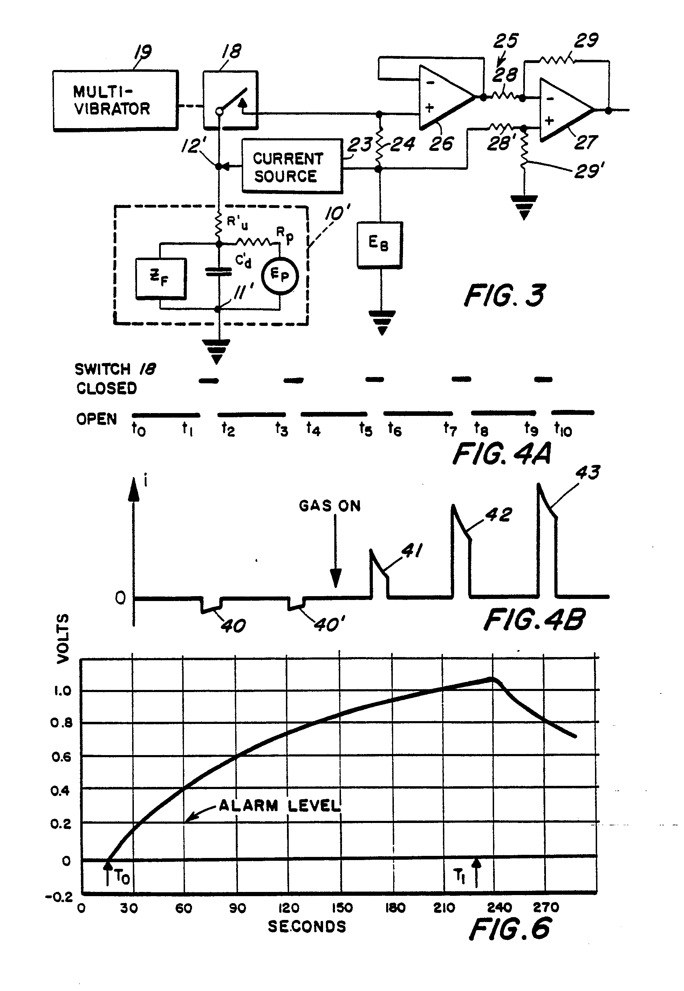

Fig. 3 is a simplified schematic of a two electrode detector cell operated in accordance with the method of the invention. Cell 10' is represented by an equivalent circuit comprising resistor Ru', capacitor Cd', faradic impedance Zf, internal voltage source $E_p$ and resistor $R_p$. The working electrode of the cell is connected through terminal 12' to the output of a current source 23 having a high internal impedance and to the input of an electronic switch 18. Current source 23 is equivalent to a high value resistor connected in series between terminal 12' and a bias voltage source $E_B$. The cell counter electrode is connected through terminal 11' to ground.

Switch 18 is controlled by a multivibrator 19 to periodically open and close the connection between terminal 12' and one end of a relatively low value resistor 24. Suitable values for the internal impedance of current source 23 and resistor 24 are 1 megohm and 1 kilohm, respectively.

The voltage output of bias source $E_B$ is selected in accordance with the redox potential of the species of gas to be detected. In clean air, capacitor $C_d'$ will be charged to the potential $E_b$. Closure of switch 18 places the same potential on both ends of resistor 24 and no current is discharged from the cell.

When a reactive gas is present, the cell accumulates charge in addition to that placed thereon by current source 23 and the potential at terminal 12' increases accordingly. The potential at terminal 12' may increase above that of bias source $E_B$ by virtue of the isolation between the bias source and terminal 12' provided by the high impedance of current source 23. Then, upon closure of switch 18, a potential difference appears across resistor 24 and current will flow therein until the cell is discharged to the potential of bias source $E_B$.

The voltage drop across resistor 24 is measured by a differential amplifier 25. Amplifier 25 comprises two operational amplifiers 26 and 27. Amplifier 26 is connected as a unity gain, non-inverting, high input impedance amplifier so that the output thereof is the voltage at the upper end of resistor 24 unaffected by the input impedance load of amplifier 27. Amplifier 27 is connected as a difference amplifier having equal value feedback and shunt resistors 29, 29'. Suitably, the values of resistors 29 and 28 are in the ratio of 100:1.

Ideally, the internal voltage source $E_p$ and resistor $R_p$ are not present in the cell 10'. However, due perhaps to impurities in the electrode materials, impurities in the electrolyte, or other causes, a parasitic internal voltage source $E_p$ and a source resistance $R_p$ manifest themselves in the production of a cell background current. Means, later described in detail, are provided for automatically adjusting the output of current source 23 to compensate for such background current when the cell is exposed to clean air.

Fig. 4A is a timing diagram showing the operation of switch 18 (Fig. 3) and Fig. 4B is a waveform diagram typifying the output of amplifier 25 for several cycles before and after challenge of the cell by an analyte gas. In Fig. 4A, switch 18 is open for the interval $t_0 - t_1$, closed for the interval $t_1 - t_2$, again opened for $t_2 - t_3$, again closed during $t_3 - t_4$, etc. It should be noted that closure of switch 18 during time $t_1 - t_2$, $t_3 - t_4$, etc. merely completes the external circuit from cell terminal 12' through resistor 24. Switch closure does not vary the potential applied to the cell as in case of bias pulse $t_1 - t_2$ of Fig. 2A.

Prior to application of a test analyte gas, during intervals $t_1 - t_2$ and $t_3 - t_4$, the cell output current (Fig. 4B) is only the low level background current 40, 40' generated by the cell internal voltage source $E_p$. This voltage may be either positive or negative, depending upon cell chemistry. Cell output current is zero at all times during which switch 18 is open.

After application of a test gas, between times

$t_4$ and $t_5$, for switch closure intervals $t_5$-$t_6$, $t_7$-$t_8$ and $t_9$-$t_{10}$, the cell output, as shown in pulses 41, 42 and 43, rises abruptly from zero to a peak value then decays, following the same law as the faradic current 22 in Fig. 2B. The increase in the peak values of pulses 41, 42 and 43 results from increased diffusion with time of the test gas into the cell.

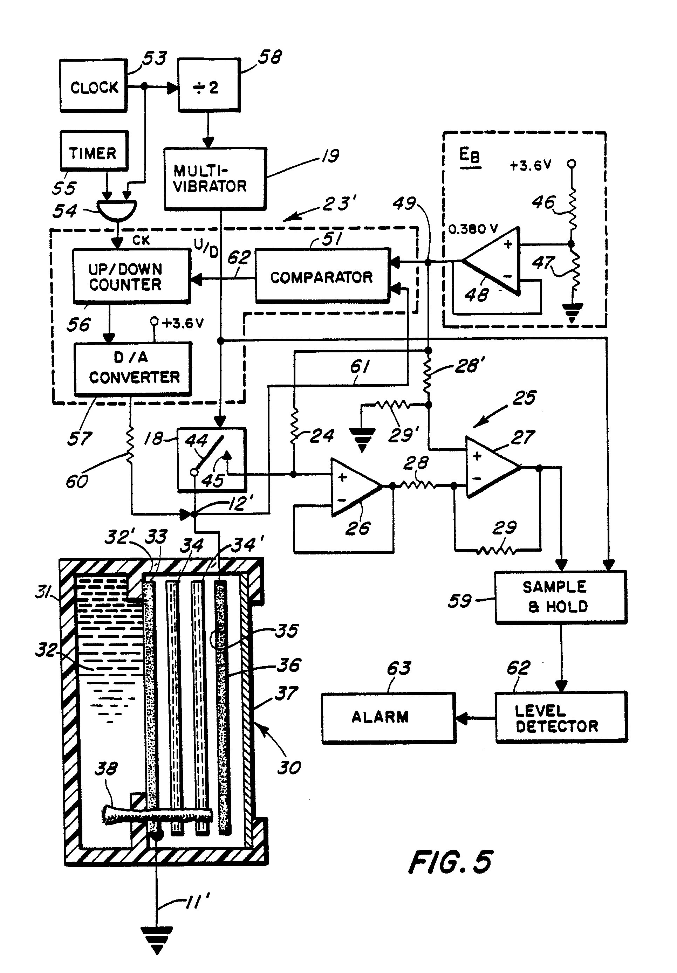

Since the whole of each of the current pulses 41, 42, 43 results from faradic current and no capacitive charging current is included therein, the peak value of each pulse is representative of the concentration of anlayte gas and the output data is immediately useful after the beginning of a current pulse. Each output pulse is, however, affected by error due to background current of the magnitude of pulses 40, 40'. Means for compensating for such background current error are described in connection with Fig. 5.

Fig. 5 illustrates in block diagram and - schematic form a electrochemical cell designed as a portable personal alarm for the detection of mustard gas, e.g. bis (2-chloroethyl) sulfide. The electrochemical cell 30 generally follows the construction of the cell described in detail in the referenced U. S. Patent 4,500,391. A molded plastic housing 31 defines an electrolyte reservoir 32 filled with an electrolyte, suitably 1 mol HC1 in a 50% by volume solution of ethylene glycol and water. The forward face of reservoir 32 is closed by a permeable membrane 32 which supports on the forward surface thereof the cell counter electrode 33 formed by a fine platinum mesh. Two hydrophilic separators 34, 34' are interleaved between the counter electrode 33 and the cell working electrode 35. Electrode 35 is formed on the rear surface of a permeable membrane support 36 but is otherwise identical to electrode 33. The forward surface of membrane 36 is covered by a permselective membrane 37 which serves to filter interferent gases from the gases entering the cell. Membrane 37 may suitably comprise a 25 micron thick layer of microporous polethylene impregnated with dimethylsilicone.

Separators 34, 34' are formed of layers of Whatman filter paper which are maintained saturated with electrolyte by a wick 38 communicating between the separators and reservoir 32. The planar parts of cell 30 are shown with substantial spacings therebetween for clarity of illustration. In actuality, these parts are assembled in close contacting relationship, with membranes 32 and 36 providing an effective fluid seal to prevent loss of electrolyte, while still permitting entry and diffusion of gases through the cell.

A conductive lead extends from the working electrode 35 to cell terminal 12'. Electronic switch 18 is shown symbolically as a single pole, single throw switch with the arm 44 thereof connected to terminal 12'. Switch contact 45 is connected to one end of resistor 24. The opposite end of resistor 24 is connected to the output of bias voltage source $E_B$.

Bias voltage source $E_B$ includes a voltage divider formed by resistors 46 and 47 connected in series between the 3.6 v. B + supply and ground. The values of resistors 46 and 47 are selected to provide a voltage at the junction thereof equal to the desired nominal potential difference between the cell working electrode 35 and counter electrode 33. In this specific embodiment the selected bias potential was 0.380 v. The junction of resistors 46 and 47 is connected to the non-inverting input of an operational amplifier 48 configured as a voltage follower. Amplifier 48 provides an ouput voltage equal to its input voltage and buffers the input voltage source against the effects of loads connected to the amplifier output.

In addition to supplying bias voltage to resistor 24, amplifier 48 provides bias voltage to input resistor 28' of differential amplifier 25 and to one input 49 of a comparator 51. Comparator 51 forms part of current source 23' corresponding to current source 23 of Fig. 3, except for the automatic means for compensating for cell background current next to be described.

A clock 53 provides clock pulses, suitably at the rate of 1 Hz. to one input of an AND gate 54. The other input to AND gate 54 is from a timer 55 which provides a high output commencing at the time the system is first powered up by application of B + voltage and continuing for a time sufficient to adjust current source 23' to compensate for background current. In this embodiment, timer 55 produces a high output for eight minutes and then the output drops low.

So long as the output of timer 55 is high, gate 54 is enabled to transmit clock pulses to the clock input of an up/down counter 56. Counter 56 may suitably have a capacity of eight bits. At full count, counter 56 produces binary 1111 1111, equivalent to decimal 255. A digital to analog converter 57 receives the count accumulated by counter 56 and an input voltage of 3.6 v. from the B + supply to produce an analog voltage output determined by the ratio of accumulated count to full count, multiplied by the supply voltage. Upon power up, counter 56 is preset to a number producing an output from converter 57 approximately equal to the selected cell bias voltage, in this case 0.380 v. For example, counter 56 is preset to binary 0001 1011, equivalent to decimal 27, and the initial output of converter 57 is $27/255 \times 3.6 = 0.381$ v.

Converter. 57 includes a relatively high value resistor 60, suitably 1 megohm, through which the analog voltage output thereof is applied to cell

terminal 12'. The voltage at cell terminal 12', through line 61 is the second input to comparator 51. Comparator 51 produces an output to the U/D input 62 of counter 56 which is high or low, depending on whether the magnitude of the bias voltage on input 49 is less than or greater than the cell voltage on terminal 12'. A high output from comparator 51 steers counter 56 to count up. So long as the voltage at terminal 12' is less than the bias voltage on comparator input 49, each clock pulse passed through gate 54 causes the analog voltage output of converter 57 to increase by $1/255 \times 3.6$ v. $= 0.014$ v. This adjustment in the output voltage of converter 57 continues until the voltage at cell terminal 12' exceeds the voltage at comparator input 49. Thereafter, until timer 55 times out, the voltage at cell terminal 12' oscillates about a value equal to the bias voltage on comparator input 49 plus or minus a quantization error of one bit $= 0.014$ v. After timer 55 times out, gate 54 is inhibited. No further clock pulses are passed to counter 56 and the counter output and converter output remain fixed at the values then pertaining.

This automatic adjustment of the output of current source 23' occurs when power is first applied to the cell and the cell is assumed to be exposed only to clean air.

Pulses from clock 53 are passed through a ÷2 circuit 58 to provide trigger pulses to multivibrator 19 at the rate of 0.5 Hz. Each output cycle of multivibrator 19 closes switch contacts 44 and 45 for a period of 0.4 sec. and opens them for a period of 1.6 sec.

During the time switch contacts 44 and 45 are closed, the cell voltage at terminal 12' is applied to one end of resistor 24 and the output of bias source is applied to the opposite end thereof. Differential amplifier 25 produces an output proportional to the voltage drop across resistor 24 which is sampled in synchronism with switch closure by a sample and hold circuit 59 controlled by multivibrator 19.

The amplitude of the held output of sample and hold 59 is compared with a predetermined threshold in level detector 62 and when such amplitude exceeds the threshold an audible or visual alarm 63 is triggered. Alarm 63 may include a confidence circuit requiring several consecutive trigger inputs before tripping to reduce the occurrence of false alarms.

Fig. 6 shows the response of a detector cell carrying a bias voltage of 0.376 v. when exposed to a concentration of 2.7 /1 mustard gas in air. The continuous line shown is actually the locus of the peak values of a plurality of samples taken at 2 second intervals.

At power up, sometime prior to $T_o$, the background signal has been reduced substantially to zero by manual adjustment of the current source in the prototype unit from which this data was taken. At time $T_o$ the cell is challenged with the specified concentration of mustard gas. After approximately 20 seconds the output of amplifier 25 has risen to the alarm level of 0.2 v., corresponding to a cell current output of 2 uA. Approximately 210 seconds after challenge, at time $t_1$, the cell is returned to clean air. The realtively long times for the cell output signal to approach equilibrium after challenge and to decay to zero after return to clean air are thought to be due to adsorption and desorption of the gas on the surfaces of the cell housing.

## Claims

1. The method of operating an electrochemical cell (10) to provide improved sensitivity of said cell for the detection of particular species of gases in a mixture of gases, said cell having a working electrode (35, a counter electrode (33), an electrolyte (32) in which said electrodes are immersed, said working electrode being exposed to said mixture of gases, and means (18) for connecting said working and said counter electrodes to an electrical circuit (24) (25) external to said cell; said method including the steps of:
opening the connection (18) between said external circuit (24) (25) and said cell electrodes (33) (35) for a first period of time to separate said external circuit from said cell; and
closing the connection between said external circuit and said cell electrodes for a second period of time to join said cell elctrodes to said external circuit; characterized by the additional steps of:
applying a fixed electrical potential ($E_B$) to said cell working electrode (35); and
measuring during said period of closure of said connection between said external circuit and said cell electrodes the difference between said fixed electrical potential ($E_B$) applied to said cell working electrode (35) and the actual potential at said cell working electrode (35), said difference between said potentials being the result of electrochemical reaction of gas within said cell.

2. A method as claimed in Claim 1 wherein said step of applying a fixed electrical potential to said cell working electrode comprises:
applying an electrical potential to said cell working electrode from a source of fixed potential having a high electrical impedance relative to the electrical impedance of said external circuit.

3. The method of operating an electrochemical cell (10) to provide improved sensitivity of said cell for the detection of particular species of gases in a mixture of gases, said cell having a working electrode (35), a counter electrode (33), an electrolyte (32) in which said electrodes are immersed and means (18) for connecting said working and counter electrodes to an electrical circuit (24) (25) external to said cell;

characterized by the steps of:

applying a non-zero bias potential ($E_B$) to said cell working electrode from a source of adjustable electrical potential (23) while exposing said cell electrode (35) to a clean mixture of gases free from the species of gases to be detected by said cell;

measuring the difference between the electrical potential at said cell working electrode (35) and said bias potential ($E_B$);

adjusting the potential of said adjustable potential source (23) until the difference measure between the electrical potential at said cell working electrode and said bias potential is substantially zero;

maintaining the potential of said adjustable potential source constant at the value producing substantially zero potential difference between the potential at said cell working electrode and said bias potential while thereafter:

exposing said cell working electrode to a mixture of gases containing the species of gas to be detected;

opening the connection between said external circuit and said cell electrodes for a first period of time to separate said external circuit from said cell;

closing the connection between said external circuit and said cell electrodes for a second period of time to join said cell electrodes to said external circuit; and

measuring during the period of closure of the connection between said external circuit and said cell electrodes the difference between said bias potential and the potential at said cell working electrode.

4. A method as claimed in Claim 3 wherein said adjustable potential source (23') presents a high impedance to said cell as compared to the impedance presented to said cell by said external circuit (24) (25).

Fig. 1
PRIOR ART

Fig. 2A

Fig. 2B

FIG. 3

SWITCH 18 CLOSED

OPEN $t_0$ $t_1$ $t_2$ $t_3$ $t_4$ $t_5$ $t_6$ $t_7$ $t_8$ $t_9$ $t_{10}$

FIG. 4A

GAS ON

FIG. 4B

VOLTS

SECONDS

FIG. 6

FIG. 5